# EUROPEAN PATENT APPLICATION

(11) **EP 1 249 754 A1**
(43) Date of publication of application: **16.10.2002**
(21) Application number: 00908060.7
(22) Date of filing: 14.03.2000
(51) Int. Cl.: G06F 9/06, A63F 13/00

(54) **COMPUTER APPARATUS WITH SOFTWARE EXECUTION JUDGING FUNCTION, SOFTWARE EXECUTION CONTROL METHOD, SOFTWARE EXECUTION JUDGING DEVICE, AND COMPUTER PROGRAM PRODUCT**

(30) Priority: 08.06.1999 JP 16083099
(71) Applicant: Interlex Inc., Tokyo 108-0023 (JP)
(72) Inventor: SATO, Kenji, Shinagawa-ku Tokyo 141-0021 (JP)
(74) Representative: Hoffmann, Eckart, Dipl.-Ing.
(86) International application number: JP0001538
(87) International publication number: WO00075769

(57) **Abstract**

A computer apparatus with a software execution judging function for allowing the user to execute only a program adequate to the user. When, for example, the user desires to execute certain game software on a game machine (1), a software execution criteria device (5) is attached to the game machine (1). In the software execution criteria device (5), the user's date of birth, the user limited time of the game software, the continuous use limited time, the use limitation time zone, the mental maturity of the user, and so forth are set. The game machine (1) judges whether or not it is proper to execute the game software on the basis of the information settings recorded in the software execution criteria device (5), and executes the software only when it has judged it is proper.

## Description

### TECHNICAL FIELD

The present invention relates to a computer apparatus having a software execution judging function to judge whether or not software may be executed, for example, a preferred computer apparatus, such as a home television game machine, which has a function for judging whether a game software may be executed or not.

### BACKGROUND ART

When software is executable on a computer apparatus, the software must conform to the operating conditions of the corresponding hardware. For example, in order to execute game software on a home television game machine (hereinafter referred to as a game machine), the game software must be made to conform to general conditions generally applied to all programs executed on computers, as well as the operating conditions of the hardware of the game machine. Conventionally, game machines have a function for determining whether or not inserted game software is made in conformance with the operating conditions of the game machine from the shape or form of the inserted game software.

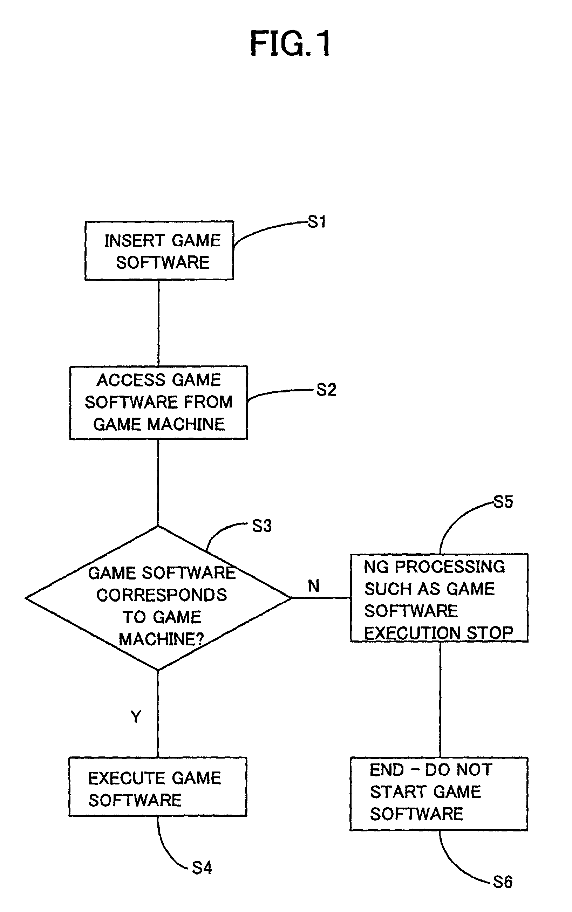

Fig. 1 is a flowchart showing the flow of game software execution-determining processing, which a conventional game machine performs. When game software is inserted into a game machine (S1), after an IPL (Initial Program Loader) starts up, the game machine accesses this game software (S2), and makes a determination as to whether or not the inserted game software corresponds to the game machine (S3). If there is correspondence (S3, Y), the execution of this software is carried out (S4), but if there is no correspondence (S3, N), processing, such as execution stop, is performed (S5), and the game software is not started (S6).

However, the judging function as to whether or not to execute game software of conventional game machines is a function for judging whether or not the game software conforms to the operating conditions of the corresponding game machine, but the conventional game machines do not comprise a function for judging whether or not a user may run the game software. That is, the conventional game machines are not able to make a judgment as to whether or not the game is appropriate for the user. Use restrictions of game software for respective users are practiced by human-initiated methods, such as regulation at the time of purchase, and guardian monitoring.

For example, the problem is that, without recourse to the human-initiated methods, it is not possible to restrict, depending on each user,the execution of a game that poses an ethical problem, such as a game that contains sexual, violent, repulsive expressions that prove problematic to the rearing of young people, it is not possible to place restrictions on game execution for an inappropriate user during a time period, such as the middle of the night, and it is not possible to place time restrictions on game execution for a user, who should not be staring at a television screen for a long period of time.

Problems like these are not limited to game machines alone, but rather are the same for ordinary computer machines as well.

With the foregoing in view, an object of the present invention is to provide a software execution judging function equipped computer apparatus that only enables the execution of software that is appropriate for a user.

### DISCLOSURE OF THE INVENTION

According to the present invention, a computer apparatus comprises setting memorizing means for memorizing an information setting relating to a criterion for judging propriety of software execution; software execution judging means for judging whether or not software may be executed based on the information setting memorized in the setting memorizing means; and software executing means for executing the software only when the software execution judging means judges that the software may be executed.

In a preferred embodiment, the information setting includes a user-specific information setting which is set individually for each user, so that the judgment results from the software execution judging means can differ depending on individual users even when the individual users try to execute the same software under the same conditions.

In a preferred embodiment, the information setting includes an age-related information setting relating to the age of a user (for example, date of birth, an offset value depending on mental, etc.), so that, when the user tries to execute age-restricted software, the software execution judging means judges that the age-restricted software may be executed in a case that the age of the user is not subject to execution restriction based on the age-related information setting.

In a preferred embodiment, the information setting includes an execution time-related information setting for restricting execution time (for example, an execution prohibited time period, a restriction value for cumulative execution time in one day, a restriction value for continuous execution time, etc.), so that, when a user tries to execute software, the software execution judging means judges that said software may be executed in a case that the current temporal condition (for example, the current time, one day cumulative execution time up until the present, and continuous execution time up until the present, etc.) is not subject to execution restriction based on the execution time-related information setting.

In a preferred embodiment, the software execution judging means does not simply judge the propriety of software execution alone, but rather also judges whether or not the software may be executed with a certain restriction. And when it is judged that the execution is allowed with the certain restriction, the computer apparatus executes the software in concord with the certain restriction (for example, it executes the software by imposing a restriction on execution time, or executes one version of the software that is congruous with the age of the user, etc.).

In a preferred embodiment, a computer apparatus has a software execution criteria device, which is either freely attachable and detachable, or freely communicably connectable and disconnectable, and the above-mentioned information setting is stored in the software execution criteria device. With the exception of software that can be executed completely without any restriction, software cannot be executed unless the software execution criteria device is mounted to or communicably connected to the computer apparatus. Or, the preferred embodiment can also be constituted such that a software execution criteria device must be mounted to execute all software.

The software execution criteria device can also be used to prevent the copying of software. For example, a software execution criteria device, which must always be mounted or connected to the computer apparatus when executing the software, is provided only to a person, who has permission to use the software, so that the other people, who do not have this software execution criteria device, cannot execute the software thereof.

A computer program product according to the present invention has a computer program of carrying out on a computer a software execution control method comprising a step for accessing an information setting which has been previously set and relates to a criterion for judging propriety of software execution; a step for judging whether or not software may be executed based on the information setting; and a step for executing the software only when it is judged that the software may be executed.

In a preferred embodiment, the above-mentioned information setting includes an a user-specific information setting which is set individually for each user, so that the judgment results from said step of judging can differ depending on individual users even when the individual users try to execute the same software under the same conditions.

### BRIEF DESCRIPTION OF THE DRAWINGS

Fig. 1 is a flowchart showing the flow of game software execution-judging processing that a conventional game machine performs;
Fig. 2 is an oblique view showing the outside of a software execution judging function equipped game machine related to an embodiment of the present invention;
Fig. 3 is a flowchart showing the flow of processing of a software execution judging function equipped game machine in an embodiment of the present invention;
Fig. 4 is a flowchart showing the flow of processing of a case in which a game software is executed with a condition attached in Step S26 of Fig. 3; and
Fig. 5 is a block diagram showing an example of a method for installing in an ordinary computer a software execution restriction program related to the present invention.

### BEST MODE FOR CARRYING OUT THE INVENTION

An embodiment of the present invention will be explained in detail hereinbelow by using the figures. Furthermore, this embodiment is targeted at a game machine for executing game software, but this is only one typical example, and the present invention can also be widely applied to computers that execute all sorts of software.

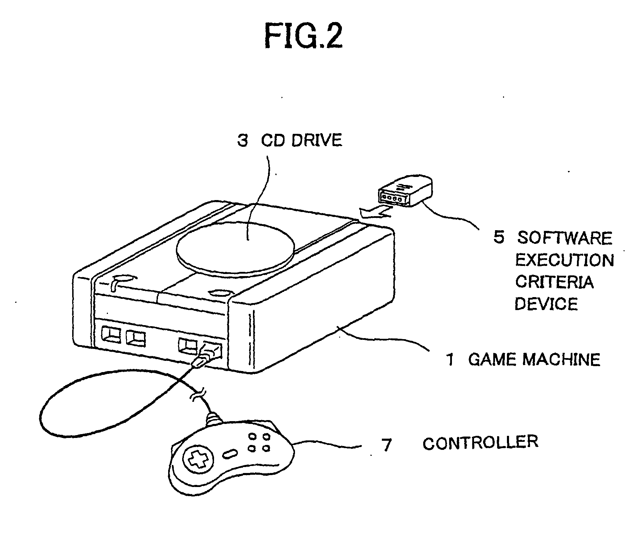

Fig. 2 is an oblique view showing the outside of a software execution judging function equipped game machine related to an embodiment of the present invention. As shown in this figure, a game machine 1 has a storage device drive, for example a CD-ROM drive 3, for loading from an external storage device game software, and game software is read in from a game CD-ROM mounted in this drive 3. Naturally, the constitution can also be such that game software is loaded into the game machine 1 from a storage device of a type other than a CD-ROM, or from a communications network. Further, a software execution criteria device 5 can be mounted or connected to this game machine 1. In this embodiment, a software execution criteria device 5 comprises a nonvolatile read-write semiconductor memory and an interface for the game machine 1, and various information settings for software execution judgment are stored in the semiconductor memory. As a mounting or connecting method of the software execution criteria device 5 to the game machine 1, there are methods such as (a) mating the software execution criteria device 5 to a connection terminal provided on the game machine 1, (b) connecting the two using a communications cable, and (c) making a connection between the two by way of a radio channel like a remote control signal, and so on.

When the game machine 1 attempts to execute certain game software, the game machine 1 determines whether or not a software execution criteria device 5 is mounted/connected, and when it is mounted/connected, then decides whether or not to execute the game software based on information settings stored in the software execution criteria device 5. Control of the this game execution decision, and the start of the game software is performed by firmware like either an OS or BIOS, which is stored in ROM built into the game machine 1 main unit.

The information settings stored in the software execution criteria device 5 are settings of information such as (1)-(6) below. These information settings can be changed under certain limitations.
(1) Current date and time. That is an absolute time indicating a date and time of the present time point, which cannot be changed by a user (It does not matter whether this function is in a format that is built into the software execution criteria device 5, or a format in which the game machine 1 performs the calculations, and the software execution criteria device 5 is aware of same at all times.). The current date and time setting is used, for example, to determine the age of a user from the current date and time, and the user's date of birth in order to start game software with an age restriction attached.
(2) Date of birth of a user using game software.
(3) Daily time restriction for using game software.
(4) Time restriction on continuous use of game software.
(5) Time period during which game software use is prohibited.
(6) Emotional maturity of a user using game software. This is a numerical value which is set in a case in which a user's mental age has not caught up with his actual age, and is an offset value for raising the target age of a game software by the amount of the age that has been set. For example, in the case of a person, who, although his actual age is 20, has been determined to be four years younger in terms of mental and emotional maturity, this number will be set at 4. By so doing, this person will not be able to play games classified as being for users 18 years old and over until he turns 22. However, this setting is constituted such that setting a minus value, for example, setting a -2, will not enable a setting by which a 16-year-old person can play a game classified as being for users 18 years old and over. Therefore, this setting is constituted such that only a plus figure can be set. A function like this makes it possible to deal with a person, who cannot be classified simply by age.

The above-mentioned information settings can be changed by the conditions cited below.

That is, the information settings of (1)-(6) can be arbitrarily changed by the seller of a software execution criteria device 5.

The information setting of (2) can be set only one time by the purchaser of a software execution criteria device 5.

The information settings of (3)-(6) can be arbitrarily changed by the purchaser of a software execution criteria device 5.

The information settings of (1)-(6) can be arbitrarily referenced by a game machine 1 and a game software (that is, by a game machine 1 in accordance with instructions of a game software), but a game software cannot change the information settings of (2)-(6) without the permission of the purchaser of a software execution criteria device 5.

A purchaser of the software execution criteria device 5 can changes the information settings of (2)-(6), by using the game machine 1 and a certain program having a change function. Further, this program can be constituted such that the purchaser of the software execution criteria device 5 can control this program via a game software.

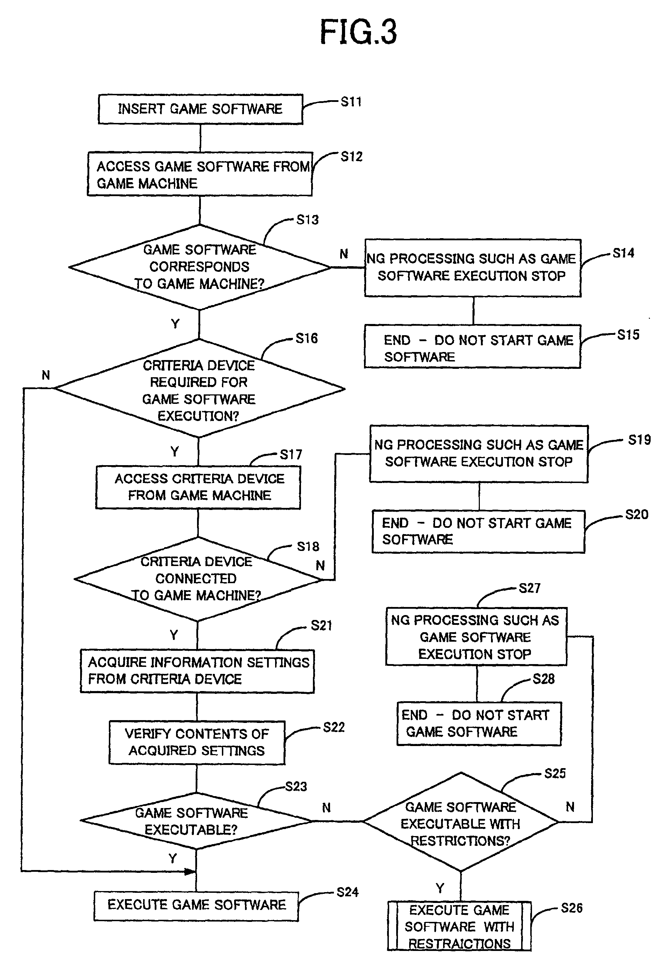

Fig. 3 shows the flow of processing when the game machine 1 starts game software.

First, when a CD-ROM of certain game software is inserted into the game machine 1 (S11), the game machine 1 starts IPL and accesses the game software (S12), and a determination is made as to whether or not this game software corresponds to the game machine 1 (S13). At this point, if the game software does not correspond to the game machine 1 (S13, N), processing for stopping the execution of the game software is performed just like with prior art (S14), and the game software is not started (S15).

Conversely, in Step S13, if the game software does correspond to the game machine 1 (S13, Y), then a decision is made as to whether or not the software execution criteria device 5 is necessary to execute this game software (S16). At this point, if it is a game software, which can be unconditionally executed without the need for the software execution criteria device 5 (S16, N), execution of this game software commences immediately (S24).

Further, in Step S16, in the case that the game software needs the software execution criteria device 5 (S16, Y), the game machine 1 tries to access the software execution criteria device 5 (S17). At this point, a decision is made as to whether or not the software execution criteria device 5 is mounted/connected to the game machine 1 (S18), and if the software execution criteria device 5 is not mounted/connected to the game machine 1 (S18, N), processing for stopping the execution of this game software is performed (S19), and this game software is not started (S20).

Conversely, in Step S18, if the software execution criteria device 5 is mounted/connected to the game machine 1 (S18, Y), the game machine 1 acquires information settings from the software execution criteria device 5. That is, the game machine 1 acquires the information such as the above-mentioned (1) current date and time, (2) user date of birth, (3) time restriction on game software use, (4) time restriction on continuous use of game software, (5) time period during which game software use is prohibited, and (6) emotional maturity of user, is obtained (S21).

Then, the game machine 1 makes decisions as to whether or not playing the game software can be approved based on the above-mentioned (1)-(6) information settings for each individual user stored in the software execution criteria device 5 (S22). For example, the game machine 1 carries out a comparison of the age of a user calculated from data acquired from the software execution criteria device 5, against the game target age programmed in the game software (or set in a game software CD-ROM, or cassette by a mechanical or electromagnetic method), a comparison of a set date/time that a game is prohibited against the current date/time the user is attempting to play the game, and a comparison of a set time restriction on play against continuous play time up until the present, and so on.

Then, the game machine 1 makes a judgment as to whether or not it would be a problem to simply execute the game software based on the results of the above-mentioned decision processing using the information settings (S23), and if executing the game software does not pose a problem (S23, Y), then execution of the game software commences, or, when its execution is in progress, the execution continues (S24).

In Step S23, if there is a problem with simply executing of the game software (S23, N), then a judgment is made as to whether or not the game software may be executed with certain restrictions (S25). If, as a result the judgment, the game software may be executed with the certain restrictions (S25, Y), this game software is executed in concord with the restrictions (S26).

The restricted execution of game software here refers to executing a game software by setting either 1 or all of the restrictions (1)-(3) cited hereinbelow.
(1) Notice a warning by displaying a warning message on the screen or outputting a voice or the like.
(2) Set a time restriction on game software operation.
(3) Execute a separate version of the game software, in which the portion of the game software that is a problem has been changed. The change can either be done partially, or the entire contents of a game can be changed.

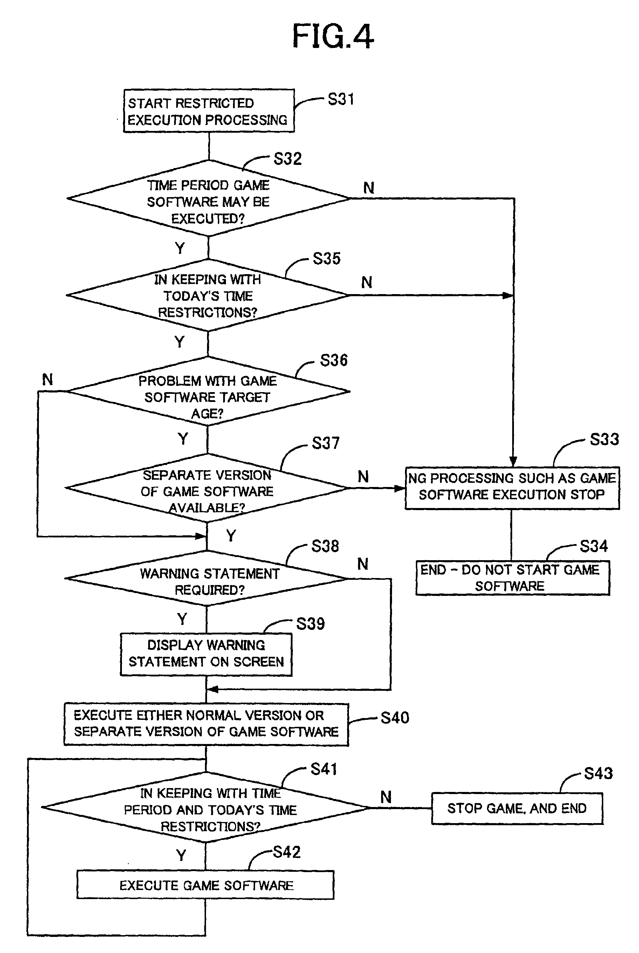

Furthermore, restricted execution processing of the game software with certain restrictions will be explained in detail hereinbelow using the flowchart shown in Fig. 4.

Meanwhile, in Step S25, if it is not possible to execute a game software even when a certain restriction is imposed (S25, N), this game software is not started, or when its execution is in progress, the execution is ended (S28).

Next, the flow of processing of the case of the above-mentioned Step S26, in which the game software is executed with a certain restriction will be explained by referring to the flowchart of Fig. 4.

As shown in Fig. 4, when restricted game execution processing commences (S31), firstly, a determination is made as to whether or not it is a time period in which a game software may be executed (S32). If the present time falls within a use prohibited time period obtained from the software execution criteria device 5 (S32, N), processing for stopping the execution of this game software is performed (S33), and the game software is not started (S34).

In Step S32, if there is no problem with the time period at which the game software is executed (S32, Y), then a determination is made as to whether or not the cumulative value of that day's game execution time up until the present is within the time restriction for that day obtained from the software execution criteria device 5 (S35), and if the time restriction for that day has been exceeded (S35, N), processing for stopping the execution of this game software is performed (S33), and the game software is not started (S34).

In Step S35, if the cumulative execution time of the game software has still not exceeded the time restriction for that day (S35, Y), next, a determination is made as to whether or not there is a problem regarding the target age of this game software (S36), and if there is a target age problem (S36, Y), a determination is made as to whether or not a separate version of the game program for which the contents have been changed is contained in the game software (S37), and if a separate version, that takes an age restriction into consideration, is not contained in the game software (S37, N), processing for stopping the execution of this game software is performed (S33), and the game software is not started (S34).

Further, in Step S37, if a separate version, that takes an age restriction into consideration, is contained in the game software (S37, Y), a judgment is made as to whether or not it is necessary to display a warning statement on the screen (S38). Conversely, in Step S36, in a case in which the age restriction of the game software does not pose a problem (S36, N), a judgment is also made as to whether or not it is necessary to display a warning statement on the screen (S38).

In Step S38, when it is necessary to display a warning statement (S38, Y), a warning statement is being displayed on the screen (S39), and the normal version or the separate version of the game software is executed (S40). Furthermore, when it is not necessary to display a warning statement in Step S38 (S38, N), the normal version or the separate version of the game software is executed as-is without a warning statement being displayed (S40).

Furthermore, while a game software is in the process of being executed, the above determinations are made at all times as to whether or not there is a problem regarding the execution time period, and the time restriction for that day (S41), and if there is no problem (S41, Y), the execution of the game software continues as-is (S42). In Step S41, if a problem occurs regarding the execution time period, and the time restriction for that day (S41, N), this game software is stopped, and the game is ended (S43).

According to the above processing, it becomes possible to carry out software execution restrictions surely and easily, and a purchaser can buy and play a game machine and game software free from concern.

The aspect of the embodiment described hereinabove is one example for explaining the present invention, but the present invention is not limited to the above-mentioned aspect of the embodiment, and a variety of modifications are possible in the scope of the gist of the invention. For example, the above-mentioned aspect of the embodiment was explained with regard to a case in which various restrictions are put into effect for ethical and health reasons when a game software is run on a television game machine, but the present invention is not limited to a television game machine, and the same software execution judging function can also be provided in a personal computer or other ordinary computer, and can be utilized such that a software program cannot be executed for a long period of time for health reasons, and/or games and other non-work-related software cannot be executed during working hours at a company or the like.

Further, in the above-mentioned aspect of the embodiment, an explanation was given with regard to a case in which a game machine is provided with a function for judging propriety of executing software by using information settings stored in a software execution criteria device, but a computer apparatus can also be provided with an intelligent function for carrying out execution judging processing by mounting not only memory, but also a CPU in a software execution criteria device. Furthermore, in this specification, a software execution criteria device is provided with a plurality of functions, and can be used in multiple applications, but, needless to say, a software execution criteria device can be limited to a uniform utilization method by limiting functionality to, say, only a function that executes an age restriction.

Further, with regard to a function for carrying out an age restriction judgment, which is one of the primary aims of this proposal, it is desirable that the same function be afforded top priority.

Furthermore, as for the structural constitution, a software execution criteria device can be built into a home television game machine, or a home television game machine can be provided with the same functions as a software execution criteria device.

In addition, since a game software can reference the information settings of a software execution criteria device, stage effect can be used as information, enabling a game to be made even more enjoyable.

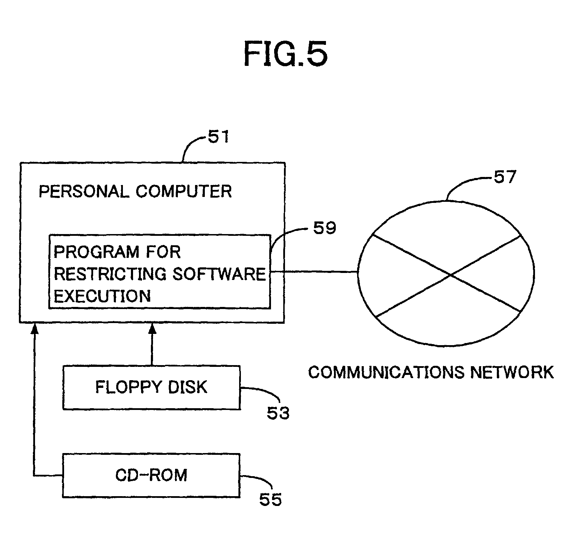

Furthermore, as shown in Fig. 5, for an ordinary computer like a personal computer 51, and for various game machines (not shown in the figure), a software execution restricting program 59 for performing processing like that explained hereinabove can be installed by way of a floppy disk 53, a CD-ROM 55, or a communications network 57 such as the Internet, and execution of the above-mentioned software can be controlled by this program 59.

## Claims

1. A computer apparatus having a software execution judging function to judge whether or not software may be executed, comprising:
setting memorizing means for memorizing an information setting relating to a criterion for judging propriety of software execution;
software execution judging means for judging whether or not software may be executed based on said information setting memorized in said setting memorizing means; and
software executing means for executing said software only when said software execution judging means judges that said software may be executed.

2. The computer apparatus according to claim 1, wherein said information setting includes a user-specific information setting which is set individually for each user, so that the judgment results from said software execution judging means can differ depending on individual users even when the individual users try to execute the same software under the same conditions.

3. The computer apparatus according to claim 1, wherein said information setting includes an age-related information setting relating to the age of a user, so that, when the user tries to execute age-restricted software, said software execution judging means judges that said age-restricted software may be executed in a case that the age of the user is not subject to execution restriction based on said age-related information setting.

4. The computer apparatus according to claim 1, wherein said information setting includes an execution time-related information setting for restricting execution time, so that, when a user tries to execute software, said software execution judging means judges that said software may be executed in a case that the current temporal condition is not subject to execution restriction based on said execution time-related information setting.

5. The computer apparatus according to claim 1, wherein said software execution judging means judges if said software may be executed without restriction, or may be executed with a certain restriction, or may not be executed; and wherein, when said software execution judging means judges that said software may be executed with the certain restriction, said software execution means executes said software in concord with the certain restriction.

6. The computer apparatus according to claim 1, further comprising a software execution criteria device which is removably mounted to or disconnectably communicably connected to said computer apparatus, wherein said setting memorizing means is incorporated in said software execution criteria device.

7. The computer apparatus according to claim 6, wherein said software execution judging means judges whether or not software may be executed based also on whether or not said software execution criteria device is mounted to or connected to said computer apparatus.

8. A method for controlling the execution of software in a computer apparatus, comprising the steps of:
accessing an information setting which relates to a criterion for judging propriety of software execution;
judging whether software may be executed based on said information setting; and
executing said software only when it is judged that the software may be executed.

9. The software execution control method according to claim 8, wherein said information setting includes a user-specific information setting which is set individually for each user, so that the judgment results from said step of judging can differ depending on individual users even when the individual users try to execute the same software under the same conditions.

10. A software execution criteria device which is removably mounted to or disconnectably communicably connected to a computer apparatus, comprising:
setting memorizing means for memorizing an information setting which has been previously set and relates to a criterion for judging propriety of software execution by said computer apparatus; and
means for providing said information setting or software execution control based on said information setting to said computer apparatus, when mounted or connected to said computer apparatus.

11. The software execution criteria device according to claim 10, wherein said information setting includes a user-specific information setting which is set individually for each user, so that the judgment results as to whether or not software may be executed can differ depending on individual users even when the individual users try to execute the same software under the same conditions.

12. A computer program product, having a computer program for carrying out a software execution control method in a computer apparatus, said software execution control method comprising the steps of:
accessing an information setting which has been previously set and relates to a criterion for judging propriety of software execution;
judging whether or not software may be executed based on said information setting; and
executing said software only when it is judged that said software may be executed.

13. A computer program product according to claim 12, wherein said information setting includes a user-specific information setting which is set individually for each user, so that the judgment results from said step of judging can differ depending on individual users even when the individual users try to execute the same software under the same conditions.
